# EUROPEAN PATENT APPLICATION

(11) **EP 3 312 102 A1**
(43) Date of publication of application: **25.04.2018**
(21) Application number: 16811684.6
(22) Date of filing: 16.06.2016
(51) Int. Cl.: B65D 1/00, B29C 49/04, B29C 49/22, B29C 49/42, B32B 27/00, B32B 27/32

(54) **DIRECT BLOW-MOLDED CONTAINER HAVING EXCELLENT SURFACE GLOSS**

(30) Priority: 17.06.2015 JP 2015122124
(71) Applicant: Toyo Seikan Co., Ltd., Tokyo 141-8640 (JP)
(72) Inventor: KATOU, Yuuichirou, Yokohama-shi Kanagawa 230-0001 (JP); OZAWA, Satomi, Yokohama-shi Kanagawa 230-0001 (JP)
(74) Representative: J A Kemp
(86) International application number: PCT/JP2016/067887
(87) International publication number: WO 2016/204210

(57) **Abstract**

The present invention relates to a directly blow-formed container including at least an outer layer composed of a propylene polymer. The outer surface of the layer composed of a propylene polymer composition containing at least a propylene polymer selected from an ethylene-propylene random copolymer and a homo polypropylene, and also a nucleating agent based on nonitol or sorbitol, is flame-treated to have a high surface gloss and an excellent appearance since occurrence of air-trapping and sharkskin is prevented or reduced.

## Description

### Technical Field:

The present invention relates to a directly blow-formed container composed of a propylene polymer, more specifically, a directly blow-formed container having an excellent surface glossiness and at the same time having a remarkable appearance where air-trapping and sharkskin are prevented or reduced.

### Background Art

A blow-formed olefin hollow container has excellent moisture resistance, lightness and shock resistance, and furthermore it is inexpensive, and thus used widely as packaging for foodstuff such as various foods, chemicals and seasonings, or commodities such as liquid detergents and cosmetics.

When a surface gloss is required for such an olefin hollow container, regardless of its type whether it is a single layer or a multilayer, the outer surface is formed of a propylene polymer, since propylene polymers have excellent glossiness. For forming the container, a sandblasted mold may be employed from the viewpoint of releaseability. However, the mold may cause a problem, namely, the sandblasted surface of the mold may be transferred to the container surface and degrade the gloss of the container surface.

Meanwhile, degradation of the roughness of the mold may cause another problem of air-trapping (a phenomenon that air remains between the mold surface and the product surface such that a part of the mold surface is not transferred to the product surface.)

It has been proposed to solve the problem of the surface ruggedness and the air-trapping on the outer surface of an olefin hollow container, which is caused by the transfer of the sandblasted surface. For this purpose, a specific olefin polymer is used, and a melting treatment such as a flame treatment is performed after blow-formation, thereby smoothening the surface and imparting the surface gloss.

### (Patent Document 1).

Further, for a container for which a higher surface gloss is required, it has also been proposed to form an outermost layer composed of polyethylene terephthalate (PET) having excellent transparency. It is noted that a higher surface gloss can be imparted to this multilayer container (Patent Document 2).

### Prior Art Documents:

### Patent Documents:

Patent Document 1: JP 2606645
Patent Document 2: WO 2008/090655

### Summary of the Invention:

### Problems to be solved by the invention:

When a blow-formed container having an outer surface composed of a propylene polymer is subjected to a melting treatment, the surface ruggedness and air-trapping caused by the sandblasted surface may be eliminated, whereby the surface smoothness is improved to provide a surface gloss. However, the melting treatment is insufficient to form a blow-formed container having a satisfactory surface gloss. That is, when a blow-formed container having an outer surface composed of propylene polymer is subjected to the melting treatment, crystals of the propylene polymer grow to cause a coarse surface during a cooldown after the melting treatment. As a result, the surface gloss at some parts of the container may be degraded so that the thus obtained container cannot have a uniform and excellent surface gloss. Furthermore, the melting treatment has difficulty in eliminating sharkskin that occurs due to the melting characteristics of the resin or the formation method.

The surface glossiness is improved by forming a PET layer on the outer surface. However, PET is more expensive than the olefin resin, and thus, formation of the outer surface with the olefin resin alone is desirable from the economic viewpoint.

Therefore, an object of the present invention is to provide a blow-formed container, which is composed of a propylene polymer, thereby having a uniform and high surface gloss as a whole and an excellent appearance where air-trapping and sharkskin are prevented or reduced, without use of PET that is more expensive than the olefin resin.

### Means for solving the problems:

The present invention provides a directly blow-formed container comprising at least a layer composed of a propylene polymer composition containing at least a propylene polymer selected from an ethylene-propylene random copolymer and homo polypropylene, and a nucleating agent based on nonitol or sorbitol, the layer having a flame-treated outer surface.

In the directly blow-formed container of the present invention, it is preferable that:
1. the propylene polymer is an ethylene-propylene random copolymer and the nucleating agent is a nonitol-based nucleating agent;
2. the nucleating agent is contained in an amount of 0.1 to 1 part by mass with respect to 100 parts by mass of the propylene polymer;
3. the propylene polymer has a melt flow rate of 1.0 to 15.0 g/10min;
4. the directly blow-formed container comprises the layer composed of the propylene polymer composition as an outer layer, and an inner layer composed of a propylene block copolymer;
5. the outer layer has a thickness of 10 to 200 µm at a container body portion;
6. the directly blow-formed container comprises the layer composed of the propylene polymer composition as an outer layer, an inner layer composed of a high-density polyethylene, and an adhesive layer interposed between the outer layer and the inner layer; and
7. a total thickness of the outer layer and the adhesive layer at the container body portion is 30 to 400 µm.

### Effects of the invention:

The directly blow-formed container of the present invention has an excellent surface glossiness of 85% or more as a gloss at 60°, which is obtained without using PET that is more expensive than olefin resins.

In particular, by using an ethylene-propylene random copolymer as the propylene polymer and a nonitol-based nucleating agent as the nucleating agent, a directly blow-formed container that can exhibit an extremely high surface gloss, specifically 87% or more as a gloss at 60° and also an excellent appearance is provided without occurrence of air-trapping and sharkskin.

### Brief Description of the Drawings:

[Fig. 1] : a cross-sectional view showing an example of structure of a directly blow-formed container of the present invention;
[Fig. 2]: a cross-sectional view showing another example of structure of a directly blow-formed container of the present invention; and
[Fig. 3] : a cross-sectional view showing still another example of structure of a directly blow-formed container of the present invention.

### Mode for Carrying Out the Invention:

The directly blow-formed container of the present invention is characterized in that it has at least a layer composed of a propylene polymer composition containing at least a propylene polymer selected from an ethylene-propylene random copolymer and a homo polypropylene, and a nucleating agent based on nonitol or sorbitol, and that the outer surface of the layer is flame-treated.

In the present invention, a flame treatment is performed after a direct blow-formation, so that the air-trapping on the surface of the product formed by the direct blow-formation and the ruggedness transferred from the mold surface can be eliminated. Further, a specific nucleating agent is blended with the propylene polymer, so that coarsening of the crystals of the propylene polymer, which is caused by the cooldown after the flame treatment, can be prevented or controlled. As a result, an excellent surface glossiness can be ensured without sacrificing the transparency of the outermost layer composed of the propylene polymer.

### (Propylene polymer composition)

In the present invention, the propylene polymer composition to constitute the outermost surface of the directly blow-formed container contains at least a propylene polymer selected from an ethylene-propylene random copolymer and homo polypropylene, and a nucleating agent based on nonitol or sorbitol.

### [Propylene polymer]

As mentioned above, the propylene polymer is an ethylene-propylene random copolymer or a homo polypropylene. A blend thereof also can be used. The ethylene-propylene random copolymer is preferred particularly from the viewpoint of the surface glossiness, the mechanical strength and the like.

The ethylene-propylene random copolymer preferably has an ethylene content in a range of 2 to 8% by mass. When the ethylene content is smaller than the above range, the mechanical strength may be inferior when compared to a case where the ethylene content is within the range. When the ethylene content is larger than the above range, the surface glossiness may be inferior when compared to a case where the ethylene content is within the range. For the ethylene-propylene random copolymer used in the present invention, any known ethylene-propylene random copolymers can be used without any particular limitations, regardless of the type of polymerization catalyst, and the examples include ethylene-propylene random copolymers of Ziegler-Natta catalyst systems, and ethylene-propylene random copolymers of Metallocene catalyst systems. Similarly, for the homo polypropylene, conventionally known homo polypropylenes can be used without any particular limitations.

Further, the propylene polymer preferably has a melt flow rate (MFR in conformity with JIS K 7210) in a range of 1.0 to 15.0 g/10min, and particularly preferably in a range of 4.0 to 10. 0 g/10min. When the MFR of the propylene polymer is smaller than the range, the melt extrudability may be inferior in comparison with a case where the MFR is within the range, and this may cause sharkskin. When the MFR of the propylene polymer is larger than the range, the formability may be inferior in comparison with a case where the MFR is within the range.

### [Nucleating agent]

The nonitol-based nucleating agent or the sorbitol-based nucleating agent used in the present invention increases the number of spherulites of the propylene polymer and at the same time serves to provide finer spherulites during a cooldown after the flame treatment, thereby exhibiting an effect of increasing the crystallization rate as a whole. This can serve to keep the crystals of the propylene polymer to be smaller and prevent effectively the degradation in the transparency of the propylene polymer.

In the present invention, it is in particular preferable to use a nonitol-based nucleating agent, whereby the surface glossiness can be further improved.

Further it is particularly preferable that the nonitol-based nucleating agent contains a coating agent, thereby enabling to prevent or reduce occurrence of sharkskin.

For the nonitol-based nucleating agent or the sorbitol-based nucleating agent, commercially available products can be used. The examples include products of Milliken & Company, i.e., Millad NX 8000 and Millad NX 8500 (both of which are nonitol-based nucleating agents) and Millad NX 3980 (sorbitol-based nucleating agent), though these examples are not limitative. Among them, Millad NX 8500 can be used preferably since it contains a coating agent.

The nucleating agent preferably is blended in an amount of 0.1 to 1.0 part by mass, and particularly preferably 0.2 to 0.6 parts by mass with respect to 100 parts by mass of the propylene polymer. When the amount of the nucleating agent is smaller than the range, sufficient surface glossiness cannot be attained unlike the case where the amount is within the range. When the amount of the nucleating agent is larger than the range, further improvement in the surface glossiness cannot be expected, and it may cause a disadvantage from the economic viewpoint, and moreover, it may make the outer surface sticky.

### (Layer constitution)

The directly blow-formed container of the present invention may be a single-layer container composed of the propylene polymer composition alone if the outer surface is composed of the propylene polymer composition. However, the directly blow-formed container is particularly preferably a multilayer container having an outer layer of the propylene polymer composition.

For the inner layer, a propylene-based block copolymer or a high-density polyethylene is used preferably from the viewpoint of mechanical strength of the directly blow-formed container.

For the propylene block copolymer, a propylene block copolymer comprising propylene and an α-olefin block copolymer can be used preferably. Particularly preferred example thereof is a propylene block copolymer including a propylene copolymer rubber comprising propylene with ethylene and at least one type of α-olefin selected from α-olefins having 4-12 carbon atoms. Examples of the α-olefins having 4-12 carbon atoms include 1-butene, 1-pentene, 1-hexene, 4-methyl-1-pentene, 1-octene, and 1-decene. In the present invention, a block copolymer of a propylene · ethylene propylene rubber can be used particularly preferably.

From the viewpoint of direct blow-formability, the propylene block copolymer preferably has MFR in a range of 0.5 to 2.5 g/10min in conformity with JIS K 7210.

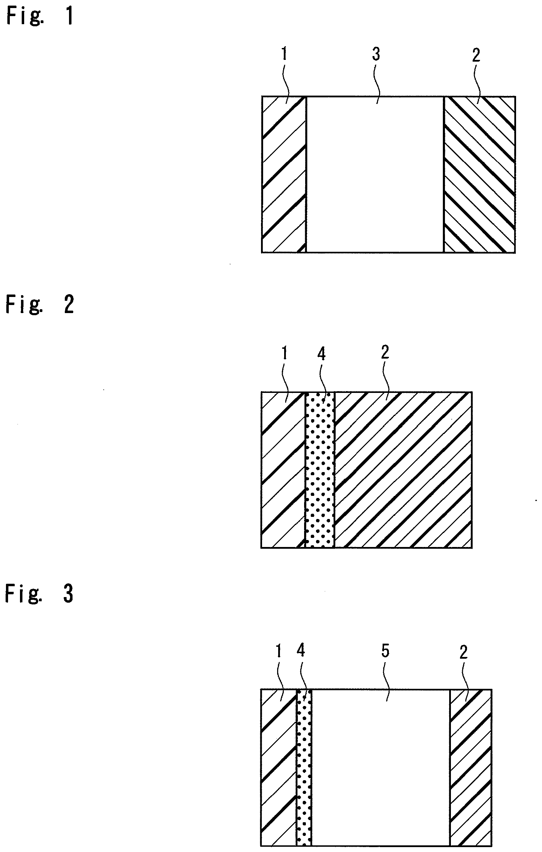

Fig. 1 is a cross-sectional view showing a structure of an example of directly blow-formed container. As shown in Fig. 1, it is possible to interpose an intermediate layer 3 of a propylene block copolymer between an outer layer 1 and the inner layer 2 as required. The propylene block copolymer contains a regrind resin (scrap resin) generated during formation of the directly blow-formed container of the present invention. The regrind resin is preferably contained in an amount of 30 to 80% by mass of the entire intermediate layer.

In the multilayer directly blow-formed container composed of the propylene polymer, the thickness of the outer layer at the container body portion is preferably 10 to 200 µm, or particularly preferably 25 to 100 µm to exhibit a high surface glossiness. When the outer layer has a thickness smaller than this range, the surface glossiness may be inferior to that of an outer layer having a thickness within the range. When the outer layer has a thickness larger than this range, further improvement in the surface glossiness cannot be expected, and it may cause a disadvantage from the economic viewpoint. When the thickness of the outer layer is extremely increased with respect to the entire thickness at the body portion, the mechanical strength may be degraded.

In this layer constitution, it is preferable for ensuring the mechanical strength of the container that the inner layer composed of a propylene block copolymer has a thickness in a range of 50 to 200 µm at the container body portion, and that the intermediate layer composed of a propylene block copolymer containing a regrind resin has a thickness in a range of 500 to 1000 µm at the container body portion.

The inner layer is not limited to the aforementioned inner layer composed of the propylene block copolymer, but it may be an inner layer composed of a high-density polyethylene having a density in a range of 0.93 to 0.97 g/cm³. The high-density polyethylene preferably has MFR in a range of 0.1 to 1.5 g/10min.

In this layer constitution, since the adhesiveness between the outer layer 1 composed of the propylene polymer composition and the inner layer 2 composed of a high-density polyethylene is poor, an adhesive layer 4 composed of an adhesive resin as mentioned below is preferably interposed therebetween as shown in Fig. 2.

Further, as shown in Fig. 3, an intermediate layer 5 composed of a high-density polyethylene containing a regrind resin can be formed as required. Similarly in this case, the adhesive layer 4 may be preferably interposed between the outer layer 1 composed of the propylene polymer composition and the intermediate layer 5 composed of the high-density polyethylene containing the regrind resin. The regrind resin is preferably contained in an amount of 30 to 80% by mass of the entire intermediate layer.

Preferable examples of the adhesive resin used for adhesion between the outer layer composed of the propylene polymer composition and either the inner layer composed of the high-density polyethylene or the intermediate layer composed of the high-density polyethylene containing the regrind resin include an ethylene · α-olefin copolymer and an acid-modified resin thereof, a copolymer of olefin and an acid, a glycidyl group-containing polymer, and any of these resins including known tackifiers, though the present invention is not limited to these examples.

In the directly blow-formed container of the present invention having an inner layer and an intermediate layer both of which are composed of a high-density polyethylene and also having an adhesive layer that is composed of the aforementioned adhesive resin, preferably the total thickness of the outer layer and the adhesive layer at the container body portion is in a range of 30 to 400 µm, and particularly preferably 60 to 150 µm to exhibit a high surface glossiness, since the adhesive resin has excellent transparency. When the total thickness of the outer layer and the adhesive layer is smaller than the range, the surface glossiness maybe inferior in comparison to the case where the total thickness is within the range. When the total thickness of the outer layer and the adhesive layer is larger than the range, further improvement in the surface glossiness cannot be expected, and furthermore, it may cause a disadvantage from the economic viewpoint. When the total thickness of the outer layer and the adhesive layer is extremely larger than the range considered as favorable with respect to the entire thickness at the body portion, the mechanical strength may be degraded.

The thickness of the adhesive layer at the container body portion is preferably in a range of 20 to 200 µm. When the thickness of the adhesive layer is smaller than the range, sufficient adhesiveness cannot be imparted, and delamination may occur. When the thickness is larger than the range, it may cause a disadvantage from the economic viewpoint.

The thickness of the inner layer composed of the high-density polyethylene is preferably in a range of 50 to 200 µm at the container body portion, and the thickness of the intermediate layer composed of the high-density polyethylene containing the regrind resin is preferably in a range of 500 to 1000 µm at the body portion, thereby to ensure the mechanical strength of the container.

A colorant may be blended in the directly blow-formed container of the present invention. The colorant may be blended in the outer layer as long as the transparency of the outer layer is not impaired. However, it is particularly preferable to blend the colorant in the aforementioned intermediate layer.

Examples of the colorant include: organic pigments such as azo pigments, phthalocyanine pigments, condensed polycyclic pigments and dye lake pigments; aluminum bright pigments such as a polarized pearl pigment, and bright pigments such as mica bright pigment and a glass bright pigment, though the present invention is not limited to these examples.

Further, conventionally-known additives such as an antioxidant, an antistatic agent and a light stabilizer can be blended in each layer of the blow-formed container of the present invention by known methods as required.

The layer constitution of the directly blow-formed container of the present invention is not limited to the aforementioned examples. It is possible to form further an intermediate layer composed of a gas-barrier resin such as an ethylene vinyl alcohol copolymer or a polyamide resin, or to blend further an oxidizing organic component and a transition metal catalyst in the intermediate layer by any conventionally known methods.

### (Direct blow-formation)

The directly blow-formed container of the present invention can be formed by any conventionally-known method except that the aforementioned propylene polymer composition is used for the outer layer. Namely, in a case of a multilayer container including an outer layer of the aforementioned propylene polymer composition, an inner layer of either the propylene block copolymer or the high-density polyethylene, further an intermediate layer and an adhesive layer interposed therebetween, these resins are co-extruded simultaneously to form a multilayer parison, which is then blown to form the container. In a case of a single-layer container composed of a propylene polymer composition alone, a single-layer parison is formed and similarly blown to form the container.

In the co-extrusion, a melt resin is extruded by using a suitable number of extruders in accordance with the types of the resins. Temperature for the extrusion is set to be not lower than the higher melting point of the resins in use and not higher than a decomposition temperature. For the aforementioned propylene polymer and the high-density polyethylene for example, it is preferably in a range of 180 to 270°C. When the extrusion temperature is extremely higher than the range, the parison may have considerable tendency of drawdown. When the extrusion temperature is extremely lower than the range, an unmelted residue may be generated due to insufficient melting and sharkskin may occur due to the resin pressure melt fracture.

Since a flame treatment is required in the present invention, a mold having a sandblasted surface can be used. The present invention is not limited to this example, but a mirror-finished mold having a surface with a higher smoothness may also be used. Furthermore, any conventionally known molds having partially sandblasted surfaces for example can be used without any particular limitations.

For the pressurized fluid used for blow-formation, usually pressurized air may be used. In addition, any other fluids such as an inactive gas like nitrogen or vapor may be used as required, and the pressure is preferably in a range of 5.0 to 20 kgf/cm². The mold for blow-formation may be cooled in advance with cooling water or the like.

### (Flame treatment)

In the present invention, the surface ruggedness caused by air-trapping or the like is eliminated by flame-treating the surface of the blow-formed container.

The flame treatment can be performed by a conventionally known method. With a burner having a thermal power of 35 to 40 µA, the container surface is treated with heat uniformly for 0.5 to 2.0 seconds at a distance of about 25 to 75 mm from the burner tip to the container surface. The container surface after the flame treatment preferably has a surface tension in a range of 40 to 60 dyne, whereby wettability suitable for printing is ensured.

The flame-treated container is allowed to cool down to room temperature. As mentioned above, since the outer layer used in the present invention is formed of a propylene polymer composition blended with a specific nucleating agent, crystal growth of the propylene polymer is suppressed. Therefore, the transparency may not be degraded even after the cooldown.

### [Examples]

### <Glossiness evaluation (60° gloss)>

For each of the body portion outer surfaces (four planes) of the obtained square hollow containers, gloss (%) was measured with respect to three points in the height direction for each and totally twelve points, at an incident angle of 60° in conformity with JIS K 7105. The average value for the twelve points is shown in Table 1.

### <Drop strength evaluation>

The thus obtained hollow containers were filled with water, each sealed with a cap and stored at 5°C for 24 hours. Later, the containers were dropped five times repeatedly at 5°C from the height of 1.2 m. More specifically, three of the containers were dropped repeatedly five times in a horizontal state (i.e. , the container body portion placed horizontally at the time of dropping), while the other three containers were dropped similarly in an upright state (i.e., the container bottom facing downward). The signs "○" and "Δ" indicate acceptable ranges for a product.
○: None of the six containers broke or even slight flaws were not found.
Δ: None of the six containers broke, but a very minute crack in only the surface layer or a very slight delamination was found in at least one of the containers, which was though within acceptable ranges.
×: One or more containers broke.

### <Air-trapping evaluation>

The body portions of the obtained hollow containers were checked visually for the following evaluation.
○: No air-trapping was found.
Δ: Very slight air-trapping was found, which was though within an acceptable range for a product.
×: Evident air-trapping was found.

### <Sharkskin evaluation>

The body portions of the obtained hollow containers were checked visually for the following evaluation.
○: No sharkskin was found.
Δ: Very minute sharkskin was found, which was though within an acceptable range for a product.
×: Evident sharkskin was found.

### <Compressive strength evaluation>

The obtained hollow containers were placed upright and compressed in the container height direction with a compression testing device, and compressive load at the time imparted with a 5 mm distortion was measured. The following ranking was conducted. The upright here indicates a state where a hollow container is placed with its mouth portion facing upward.
○: Compressive load was 250 N or more.
Δ: Compressive load was 200 N or more and less than 250 N.
×: Compressive load was less than 200 N.

### <Example 1>

For the propylene polymer composition to constitute the outer layer, a resin (propylene polymer) of a composition and a nucleating agent as shown in Table 1 were used. For the resin to constitute the intermediate layer, an ethylene-propylene block copolymer containing a regrind resin of 55% by mass (having a density of 0.90 g/cm³, and MFR of 1.2 g/10min) was used, and for the inner layer, an ethylene-propylene block copolymer (having density of 0.90 g/cm³, and MFR of 7.5 g/10min) was used.

The details of the propylene polymers in Table 1 are as follows.
- Random PP: PC630A (ethylene-propylene random copolymer having a density of 0.9 g/cm³, and MFR of 7.0 g/10min) supplied by SunAllomer Ltd.
- Homo PP: PM600A (homo polypropylene having a density of 0.9 g/cm³, and MFR of 7.5 g/10min) supplied by SunAllomer Ltd.

The MFR measurement was conducted in conformity with JIS K7210.

The details of the types of the nucleating agents in Table 1 are as follows.
- Nonitol 8500 (Millad NX8500 manufactured by Milliken & Company)
- Nonitol 8000 (Millad NX8000 manufactured by Milliken & Company)
- Sorbitol 3980 (Millad NX3980 manufactured by Milliken & Company)

The hollow container was manufactured in the following manner. Three extruders were each filled with the aforementioned resins. The resins were plasticized and kneaded while being heated, thereby forming a three-layer structured parison by use of a multilayer head. Subsequently, the parison was clamped with molds having a cavities, blow-formed and later flame-treated to produce a square hollow container with a capacity of 500 mL (directly blow-formed container having a total thickness at the container body portion of 1000 µm; outer layer thickness: 50 µm, intermediate layer thickness: 780 µm, and inner layer thickness: 170 µm). After the flame treatment, the container was allowed to cool down to room temperature.

For the flame treatment, a burner with thermal power 39 µA was used. The whole circumference of the body portion was flame-treated at a distance of 50 mm from the burner tip to the container surface.

### (Examples 2 to 11)

Square hollow containers were produced in the same manner as in Example 1 except that the propylene polymer composition to constitute the outer layer was changed to the compositions indicated in Table 1. In changing the thickness of the outer layer at the body portion, the thickness of the intermediate layer was adjusted so that the total thickness at the container body portion would be 1000 µm.

### (Example 12)

For the propylene polymer composition to constitute the outer layer, the resin of the composition and the nucleating agent as shown in Table 1 were used. For the adhesive resin to constitute the adhesive layer, a colorless transparent adhesive resin containing a styrene elastomer including a tackifier (having a density of 0.93 g/cm³, and MFR of 2.1 g/10min) was used. For the resin to constitute the intermediate layer, a high-density polyethylene containing a regrind resin of 55% by mass (having a density of 0.96 g/cm³, and MFR of 0.4 g/10min) was used, and, for the inner layer, a high-density polyethylene (having a density of 0.96 g/cm³, and MFR of 0.4 g/10min) was used.

The hollow container was produced in the following manner. Four extruders were each filled with the aforementioned resins. The resins were plasticized and kneaded while being heated, which were then extruded to form a four-layer structured parison by use of a multilayer head. Blow-formation and flame treatment were performed similarly to Example 1 to produce a square hollow container having a capacity of 500 mL (having a total thickness of 1000 µm at the container body portion; outer layer thickness : 50 µm, adhesive layer thickness: 50 µm, intermediate layer thickness: 730 µm, and inner layer thickness: 170 µm) was produced.

### (Examples 13 to 16)

Four-layer structured square hollow containers were produced through processes of blow-formation and flame treatment similar to those of Example 12, except that either the outer layer or the adhesive layer was modified as indicated in Table 1. In changing the thickness of the outer layer or the adhesive layer at the body portion, the thickness of the intermediate layer was adjusted so that the total thickness at the container body portion would be 1000 µm.

### (Comparative example 1)

A three-layer structured square hollow container having a capacity of 500 mL was produced in the same manner as Example 1 except that the nucleating agent was not contained in the outer layer.

### (Comparative example 2)

A three-layer structured square hollow container having a capacity of 500 mL was produced in the same manner as Example 1 except that the flame treatment was omitted.

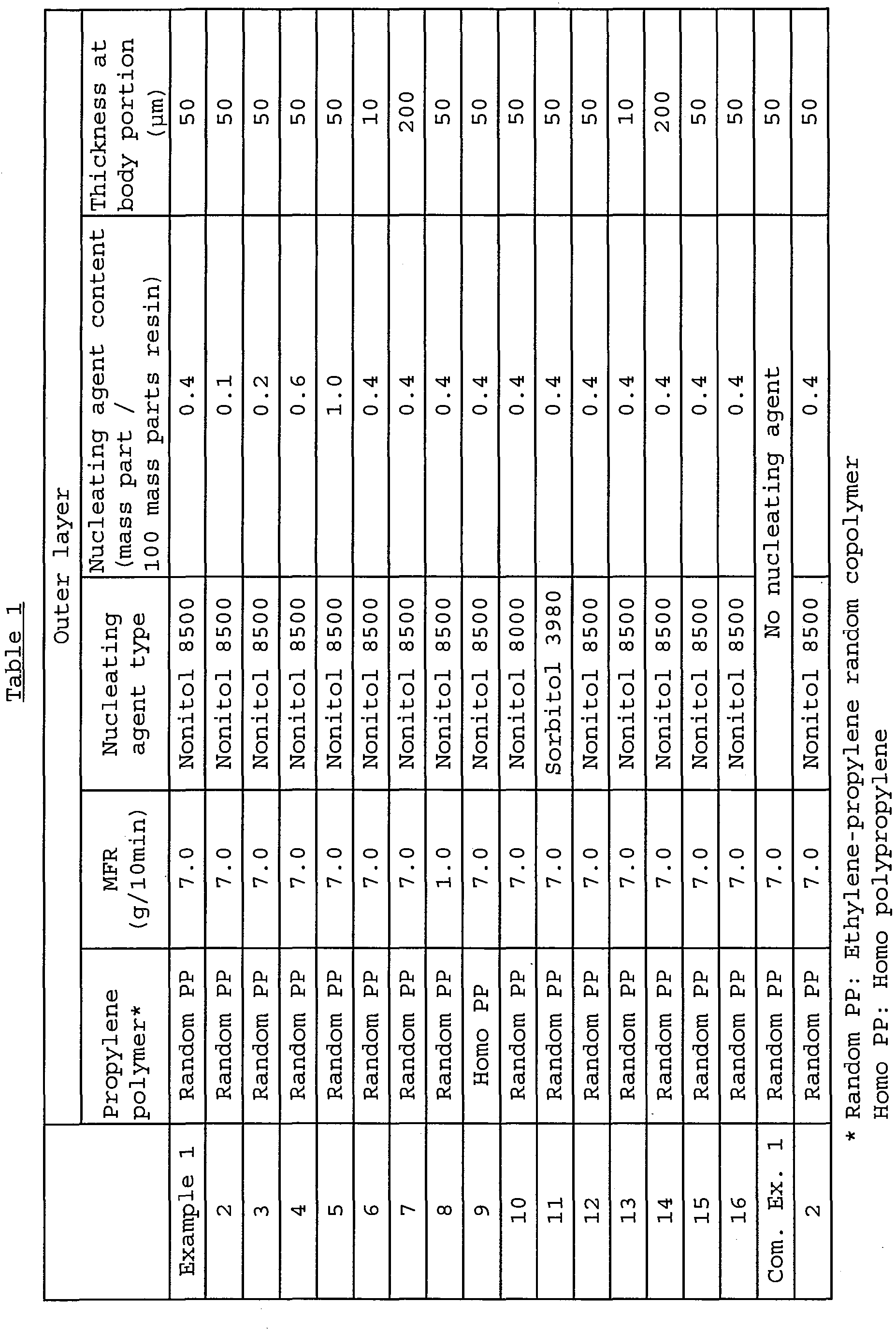

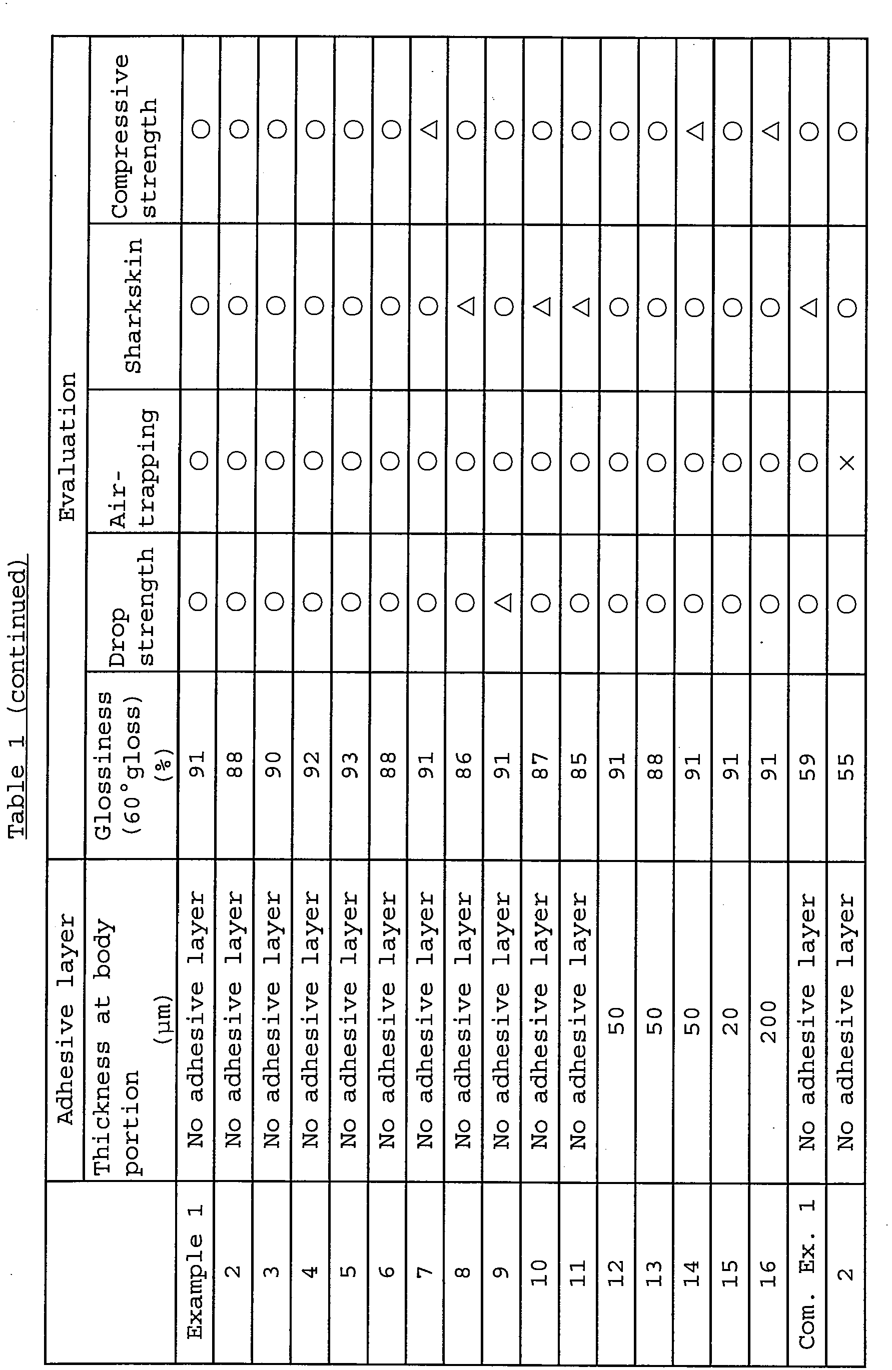

### Industrial Applicability

The directly blow-formed container of the present invention has an excellent surface gloss, and it is excellent from economic viewpoint since it can be formed of only inexpensive olefin resins. Therefore, the container can be used favorably for products such as detergents for clothing to be sold at low prices.

### Explanations of Letters or Numerals:

- 1:: outer layer
- 2:: inner layer
- 3:: intermediate layer
- 4:: adhesive layer
- 5:: intermediate layer

## Claims

1. A directly blow-formed container comprising at least a layer composed of a propylene polymer composition containing at least a propylene polymer selected from an ethylene-propylene random copolymer and homo polypropylene, and a nucleating agent based on nonitol or sorbitol, the layer having a flame-treated outer surface.

2. The directly blow-formed container according to claim 1, wherein the propylene polymer is an ethylene-propylene random copolymer and the nucleating agent is a nonitol-based nucleating agent.

3. The directly blow-formed container according to claim 1 or 2, wherein the nucleating agent is contained in an amount of 0.1 to 1 part by mass with respect to 100 parts by mass of the propylene polymer.

4. The directly blow-formed container according to any one of claims 1 to 3, wherein the propylene polymer has a melt flow rate of 1.0 to 15.0 g/10min.

5. The directly blow-formed container according to any one of claims 1 to 4, comprising the layer composed of the propylene polymer composition as an outer layer, and an inner layer composed of a propylene block copolymer.

6. The directly blow-formed container according to claim 5, wherein the outer layer has a thickness of 10 to 200 µm at a container body portion.

7. The directly blow-formed container according to any one of claims 1 to 4, comprising the layer composed of the propylene polymer composition as an outer layer, an inner layer composed of a high-density polyethylene, and an adhesive layer interposed between the outer layer and the inner layer.

8. The directly blow-formed container according to claim 7, wherein a total thickness of the outer layer and the adhesive layer at the container body portion is 30 to 400 µm.
